(19) 

**Europäisches Patentamt**
**European Patent Office**
**Office européen des brevets**

(11) **EP 3 614 292 A1**

(12) **EUROPEAN PATENT APPLICATION**

(43) Date of publication:
**26.02.2020 Bulletin 2020/09**

(51) Int Cl.:
*G06F 21/62* (2013.01)  *H04L 29/08* (2006.01)
*H04L 9/08* (2006.01)  *H04L 29/06* (2006.01)

(21) Application number: **19193216.9**

(22) Date of filing: **23.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.08.2018 EP 18190375**

(71) Applicant: **Koninklijke KPN N.V.**
**3072 AP Rotterdam (NL)**

(72) Inventors:
• **Hernández Fernández, Joel Levi**
  **2511 CK The Hague (NL)**
• **Zimmermann, Phil**
  **3072 AP Rotterdam (NL)**

(74) Representative: **Wuyts, Koenraad Maria**
**Koninklijke KPN N.V.**
**Intellectual Property Group**
**P.O. Box 25110**
**3001 HC Rotterdam (NL)**

(54) **FILE TRANSFER SYSTEM COMPRISING AN UPLOAD, STORAGE AND DOWNLOAD DEVICE**

(57)    Some embodiments relate to a file transfer system, e.g., to a cryptographic upload device, download device and/or storage device. The upload device is (100) configured for online storing of one or more files (102) on a cryptographic storage device (200) for download by a cryptographic download device (300). Some embodiments relate to generating a manifest (104) comprising one or more file identifiers and one or more file encryption keys.

Fig. 1d

EP 3 614 292 A1

Printed by Jouve, 75001 PARIS (FR)

**Description**

**FIELD OF THE INVENTION**

The invention relates to a cryptographic upload device, a cryptographic storage device, a cryptographic download device, a cryptographic upload method, a cryptographic storage method, a cryptographic download method, a computer readable medium.

**BACKGROUND**

An important aspect of computer networks, in particular the Internet, is the ability to share data between different users. Sharing data allows different users across the globe to cooperate on the same project, or to share digital content, etc. Until recently the primary means to transfer data between different users was to attach the data to an e-mail, or to store the data in file servers, e.g., using an FTP protocol, e.g., as described in RFC 7151. Users or entities also share files through such services as WeTransfer, and share access to drives where multiple files may be organized and stored, e.g., via Google Drive and Dropbox. With the growth of the internet the need for easy transfer of files as only grown.

A known system for transferring files is disclosed in WO 2017/163069 A1, "A method and system for controlling data transmission", included herein by reference. The known system discloses a system for controlling data transmission between parties. A link is created between a first and a second party. The links include the conditions under which a communication channel can be established with the second party for the transportation of data of the first party via the link. The conditions may include conditions of timing and/or usage. For example, the timing conditions might specify transportation only during specified time periods, etc. A communications channel is established between the first and second parties based upon the link to transport data associated with the first party. Either of first or second parties may initiate establishment of the communications channel.

There remains a need for a transfer system in which users can transfer files through a third party, e.g., to support large files, or to support the parties that are not always on-line. Moreover, it is desired that confidentiality of the files is improved, in particular confidentiality against intermediaries such as the third party. There is a desire for an improved system to enable data sharing or transmission between multiple parties.

The following references are acknowledged:

[1] Signal, https://www.signal.org/
[2] Wire, https://wire.com/en/
[3] WhatsApp, https://www.whatsapp.com/
[4] OpenPGP Message Format, https://tools.ietf.org/html/rfc4880
[5] Recommendation for Block Cipher Modes of Operation: Galois/Counter Mode (GCM) and GMAC, https://nvlpubs.nist.gov/nistpubs/legacy/sp/nistspecialpublication800-38d.pdf
[6] HMAC: Keyed-Hashing for Message Authentication, https://tools.ietf.org/html/rfc2104
[7] HMAC-based Extract-and-Expand Key Derivation Function (HKDF), https://tools.ietf.org/html/rfc5869
[8] The Angular Application Platform, https://angular.io/
[9] The Django Web Framework, https://www.djangoproject.com/
[10] A Universally Unique IDentifier (UUID) URN Namespace, https://tools.ietf.org/html/rfc4122
[11] Web Cryptography API, https://www.w3.org/TR/WebCryptoAPI/
[12] HTTPS Everywhere, https://www.eff.org/https-everywhere
[13] AdBlock, https://getadblock.com/
[14] The Tor Network, https://www.torproject.org/
[15] Uniform Resource Identifier (URI): Generic Syntax, https://tools.ietf.org/html/rfc3986
[16] Domain Name System Security Extensions, https://tools.ietf.org/html/rfc2535
[17] The Base16, Base32, and Base64 Data Encodings, https://tools.ietf.org/html/rfc4648
[18] The JavaScript Object Notation (JSON) Data Interchange Format, https://tools.ietf.org/html/rfc8259
[19] Multipurpose Internet Mail Extensions (MIME) Part One: Format of Internet Message Bodies, https://tools.ietf.org/html/rfc2045

**SUMMARY OF THE INVENTION**

A cryptographic upload device, a cryptographic storage device and a download device are provided to address some of the above and other problems.

The cryptographic upload device is configured for online storing of one or more files on a cryptographic storage device for download by a cryptographic download device. The cryptographic upload device may comprise a storage interface configured to access the one or more files. The cryptographic upload device may further comprise a communication interface configured to communicate with the storage device over a computer network, and the cryptographic upload device may comprisea processor configured for online storing of one or more files on a cryptographic storage device. The online storing may comprise generating one or more file encryption keys. The online storing may comprise, for each file of the one or more files,

- encrypting the file to obtain an encrypted file with a key of the one or more file encryption keys, and transferring the encrypted file to the storage device and obtaining a file identifier associated with the encrypted file at the storage device. The processor may be further configured for: generating a manifest comprising the obtained one or more file identifiers and the one or more file encryption keys,
- generating a manifest encryption key, encrypting the manifest with the manifest encryption key to obtain an encrypted manifest, transferring the encrypted manifest to the storage device, and obtaining a transfer identifier associated with the encrypted manifest at the storage

device. The processor may be further configured for generating download information comprising the transfer identifier and the manifest encryption key.

The cryptographic storage device is configured for online storing of one or more files received from a cryptographic upload device for download by a cryptographic download device. The cryptographic storage device may comprise

- a storage interface configured to store the one or more files in encrypted form,
- a communication interface configured to communicate with the upload device and the download device over a computer network, and
- a processor. The processor may be configured to

    - for each file of the one or more files,

- receive from the upload device the file encrypted with a key of one or more file encryption keys,
- store the received encrypted file through the storage interface and obtain a file identifier associated with the encrypted file for retrieving the encrypted file from the storage interface, and
- receive an encrypted manifest comprising the one or more file identifiers and the one or more file encryption keys, obtain a transfer identifier, store the received encrypted manifest through the storage interface associated with the transfer identifier for later retrieving of the encrypted manifest from the storage interface.

The cryptographic download device is configured for downloading one or more files stored online on a cryptographic storage device for download by a cryptographic upload device. The cryptographic download device may comprise

- a communication interface configured to communicate with the storage device over a computer network, and
- a processor configured for downloading one or more files form the cryptographic storage device. The downloading may comprise
- sending a download request to the storage device, the download request comprising a transfer identifier,
- receiving an encrypted manifest associated with the transfer identifier,
- decrypting the encrypted manifest with a manifest encryption key. The processor may be further configured to:
- obtain one or more file identifiers from the manifest, send the one or more file identifiers to the storage device and receive the corresponding one or more encrypted files,
- obtain one or more file encryption keys from the manifest and decrypt the received encrypted files.

In some embodiments, a web browsing program and/or web serving program is executed. The browsing program being configured to retrieve from the internet, e.g., from the web serving program, one or more web pages comprising multiple instructions executable by the browsing program, said multiple instructions implementing the online storing or retrieving of the one or more files.
In an embodiment, the download information may comprise a URL, said URL comprising a network address of the storage device, the transfer identifier, and manifest encryption key. The manifest encryption key may be part of the URL as a fragment identifier.
In an embodiment, the download information may comprise a computer optical-readable code encoding at least one of the transfer identifier, and the manifest encryption key. In an embodiment, the download information may comprise a computer optical-readable code encoding at least both the transfer identifier, and the manifest encryption key.
The upload, storage and download devices may be electronic devices. The upload, storage and download devices may be mobile devices, e.g., a mobile phone; in particular so, the upload and download devices. The upload, storage and download devices may be a computer. The upload, storage and download devices may be incorporated in other devices, e.g., in a consumer device, e.g., a television, a game console, set-top box, etc. A device may combine an upload device and a download device, and possibly even a storage device.

Embodiments of an uploading, storing, and/or downloading method described herein may be applied in a wide range of practical applications. Such practical applications include the sharing of information, e.g., business information, content, e.g., entertainment content, pictures, messages, etc., with other computers.

An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all the steps of an embodiment of the method when the computer program is run on a computer. Preferably, the computer program is embodied on a computer readable medium.

Another aspect of the invention provides a method of making the computer program available for downloading. This aspect is used when the computer program is uploaded into, e.g., Apple's App Store, Google's Play Store, or Microsoft's Windows Store, and when the computer program is available for downloading from such a store.

## BRIEF DESCRIPTION OF THE DRAWINGS

Further details, aspects, and embodiments of the invention will be described, by way of example only, with reference to the drawings. Elements in the figures are illustrated for simplicity and clarity and have not necessarily been drawn to scale. In the Figures, elements which correspond to elements already described may have the same reference numerals. In the drawings,

Figure 1a schematically shows an example of an embodiment of a cryptographic upload device,
Figure 1b schematically shows an example of an embodiment of a cryptographic storage device,
Figure 1c schematically shows an example of an embodiment of a cryptographic download device,
Figure 1d schematically shows an example of an embodiment of a cryptographic file system,
Figure 2a schematically shows an example of an embodiment of a cryptographic upload device,
Figure 2b schematically shows an example of an embodiment of an encryption key unit,
Figure 2c schematically shows an example of an embodiment of a cryptographic file system,
Figure 3a schematically shows an example of an embodiment of a cryptographic storage device,
Figure 3b schematically shows an example of an association between a file or manifest and a file identifier or transfer identifier,
Figure 4 schematically shows an example of an embodiment of a cryptographic download device,
Figure 5 schematically shows an example of an embodiment of a cryptographic upload method,
Figure 6 schematically shows an example of an embodiment of a cryptographic storage method,
Figure 7 schematically shows an example of an embodiment of a cryptographic download method,
Figure 8a schematically shows a computer readable medium having a writable part comprising a computer program according to an embodiment,
Figure 8b schematically shows a representation of a processor system according to an embodiment.

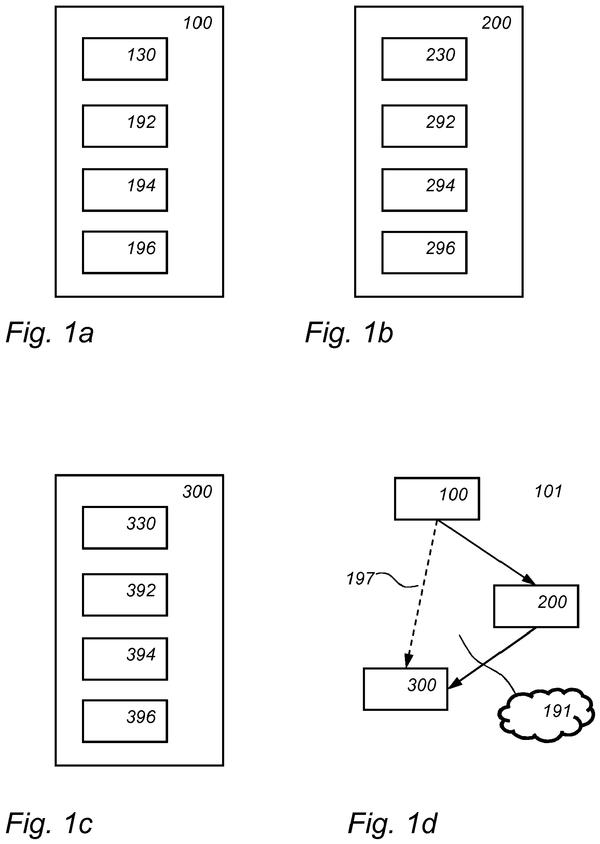

List of Reference Numerals in figures 1a-1d-4, 8a, 8b:

100 a cryptographic upload device
101 a cryptographic file transfer system
102 one or more files
104 a manifest
110 an encryption key unit
111 a random number generator
112 one or more file encryption keys
113 a hash unit
114 a manifest encryption key
115 a key derivation unit

| 120 | an encryption unit |
|---|---|
| 122 | one or more encrypted files |
| 124 | an encrypted manifest |
| 130 | a communication interface |
| 132 | one or more file identifiers |
| 134 | a transfer identifier |
| 140 | download information unit |
| 142 | download information |
| 150 | a manifest unit |
| 160 | a web browsing program |
| 162 | one or more web pages |
| 164 | an authentication token |
| 166 | file transfer information |
| 168 | an authentication token |
| 191 | a computer network |
| 192 | a storage interface |
| 194 | a processor |
| 196 | a memory |
| 197 | an out-of band channel |

| 200 | a cryptographic storage device |
|---|---|
| 202, 203 | an encrypted file |
| 210 | a storage unit |
| 212, 213 | a file identifier |
| 214 | an encrypted manifest |
| 215 | a transfer identifier |
| 220 | a database |
| 230 | a communication interface |
| 240 | a download unit |
| 292 | a storage interface |
| 294 | a processor |
| 296 | a memory |

| 300 | a cryptographic download device |
|---|---|
| 320 | a decryption unit |
| 330 | a communication interface |
| 340 | download information unit |
| 392 | a storage interface |
| 394 | a processor |
| 396 | a memory |

| 1000 | a computer readable medium |
|---|---|
| 1010 | a writable part |
| 1020 | a computer program |
| 1110 | integrated circuit(s) |
| 1120 | a processing unit |
| 1122 | a memory |
| 1124 | a dedicated integrated circuit |
| 1126 | a communication element |
| 1130 | an interconnect |
| 1140 | a processor system |

## DETAILED DESCRIPTION OF THE EMBODIMENTS

While this invention is susceptible of embodiment in many different forms, there are shown in the drawings and will herein be described in detail one or more specific embodiments, with the understanding that the present disclosure is to be considered as exemplary of the principles of the invention and not intended to limit the invention to the specific embodiments shown and described.

In the following, for the sake of understanding, elements of embodiments are described in operation. However, it will be apparent that the respective elements are arranged to perform the functions being described as performed by them.

Further, the invention is not limited to the embodiments, and the invention lies in each and every novel feature or combination of features described herein or recited in mutually different dependent claims.

Figures 1a, 1b, and 1c schematically show an embodiment of a cryptographic upload device 100, a cryptographic storage device 200, and a cryptographic download device 300, respectively. Figure 1d schematically shows an example of an embodiment of a cryptographic file transfer system 101 comprising upload device 100, storage device 200 and download device 300. Upload device 100, storage device 200, and download device 300 may comprise one or more of a storage interface 192, 292, 392, a processor 194, 294, 394 and a memory 196, 296, 396, respectively.

The upload device 100, storage device 200, and download device 300, e.g., the various devices of system 101 may communicate with each other over a computer network 191. The computer network may be an internet, an intranet, a LAN, a WLAN, etc. Computer network 191 may be the Internet. The computer network may be wholly or partly wired, and/or wholly or partly wireless. For example, the computer network may comprise Ethernet connections. For example, the computer network may comprise wireless connections, such as Wi-Fi, ZigBee, and the like. The devices comprise a connection interface which is arranged to communicate with other devices of system 101 as needed. For example, the connection interface may comprise a connector, e.g., a wired connector, e.g., an Ethernet connector, an optical connector, or a wireless connector, e.g., an antenna, e.g., a Wi-Fi, 4G or 5G antenna. For example, upload device 100, storage device 200, and download device 300 may comprise communication interface 130, 230, 330 respectively. Computer network 191 may comprise additional elements, e.g., a router, a hub, etc.

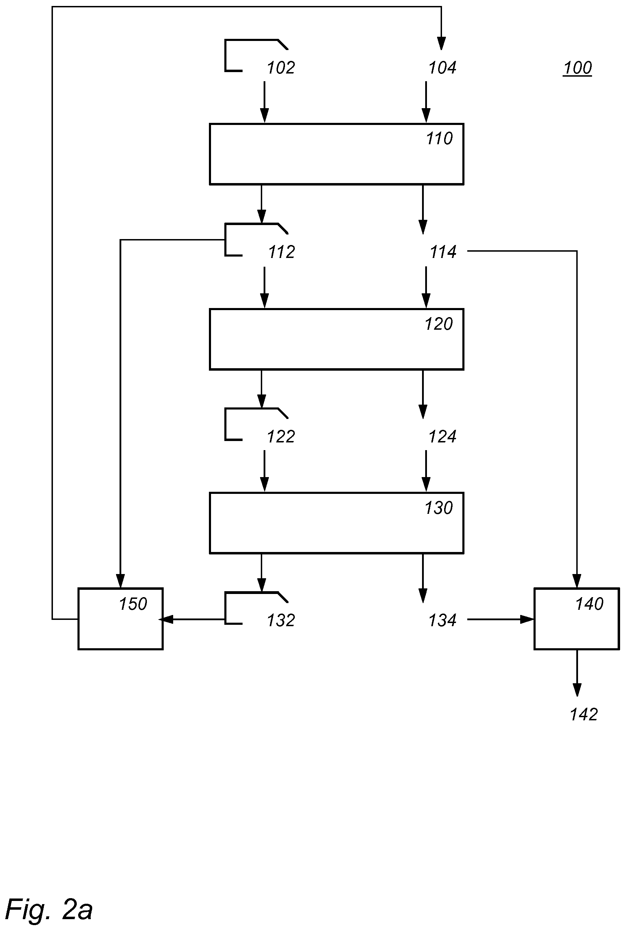

The execution of the upload device 100, storage device 200, and download device 300, may be implemented in a processor, e.g., a processor circuit, examples of which are shown herein. The following figures, in particular figures 2a, 3a and 4, show functional units that may be functional units of the processor of the respective devices. For example, figures 2a, 3a and 4 may be used as a blueprint of a possible functional organization of the processor. The processor is not shown separate from the units in these figures. For example, the functional units shown in the figures may be wholly or partially implemented in computer instructions that are stored at device 100, 200 or 300, e.g., in an electronic memory of the device, and are executable by a microprocessor of the device. In hybrid embodiments, functional units are implemented partially in hardware, e.g., as coprocessors, e.g., crypto coprocessors, and partially in software stored and executed on device 100, 200, or 300.

Devices 100, 200 and 300 may comprise a storage interface to store and/or retrieve files, possibly encrypted files. For example, the storage interface may be implemented locally, e.g., as an interface to a memory comprised in the device, e.g., memory 196, 296, or 396 respectively. The storage interface may also interface with offline, e.g., non-local, storage, e.g., cloud storage, e.g., a storage such as a memory or a drive located in another device. If cloud storage is used the devices may comprise a local storage as well, e.g., a memory. For example, the memory may be used to store computer programming instructions, temporary storage of files and the like.

Embodiments of transfer system 101 allow a user at an upload device to share one or more files with another user at a download device securely even when the intended receiver is sometimes offline. In some embodiments, it is not required that users of upload or download devices install any software; instead, users can simply navigate to the storage device with their web browser to use the service. The download device may be temporarily offline, since the file is encrypted and stored on the server. Interestingly, the encryption key may remain private to the two parties and does not need to be disclosed to any third party, including to the storage device. The encryption key may be delivered to the receiver in an out-of-band channel 197. The out-of-band channel 197 preferably does not run via storage device 200. Nevertheless, out-of-band channel 197 may or may not use computer network 191. For example, out-of-band channel 197 may be a confidential and/or optionally authenticated channel, e.g., a secure end-to-end messengers such as Signal [1], Wire [2], and WhatsApp [3], or via emails, possibly encrypted, e.g., with the assistance of PGP [4]. To facilitate the key transmission procedure from upload device 100 to download device 300, in addition to or alternatively to sending the key in plain text, some embodiments can encode the encryption key as a picture that the receiver can parse, e.g., with a web camera, which saves the inconvenience of entering long encryption keys and/or transfer IDs.

Suppose a user of the upload device, e.g., 'Alice' has a large secret file which she would like to transfer to a user of a download device, e.g., 'Bob' securely, e.g., ensure the integrity and/or confidentiality of the file. In addition, she would like to transfer the file without waiting for Bob to become online since Bob might live in a different time zone. Furthermore, due to the size of the file, sending it as an attachment via an encrypted email or a secure end-to-end messenger is not feasible. Embodiments solve this problem by utilizing a storage device 200 which is not necessarily trustworthy. For example, Alice may derive a secret encryption key and apply authenticated encryption on the file, e.g., with a symmetric block cipher. She then uploads the encrypted file to the server, and sends the encryption key and metadata for retrieving the encrypted file from the server to Bob via an out of-band channel. After Bob receives the information, he can retrieve the encrypted file from the server and decrypt the file locally. Bob may subsequently verify the integrity of the file. Although embodiments could use asymmetric cryptography, embodiments can work very well using only symmetric cryptography. The latter is an advantage since the symmetric cryptography requires significantly fewer resources.

**Figure 2a** schematically shows an example of an embodiment of a cryptographic upload device 200. Upload device 100 is configured for online storing of one or more files 102 on a cryptographic storage device 200 for download by a cryptographic download device 300. Upload device 100 may be implemented as in upload device 100 according to figure 1a. Upload device 100 comprises a storage interface configured to access the one or more files 102. The storage interface may interface to a local storage, e.g., a memory or a drive, etc. The storage interface may interface to a non-local storage, e.g., to a cloud-storage. Device 100 comprises a communication interface configured to communicate with storage device 200 over a computer network. For example, the communication interface may be an interface to the internet, e.g., using a TCP/IP protocol, or the like. Upload device 100 is configured to store the one or more files 102 on cryptographic storage device 200. For example, online storing by upload device 100 may comprise storing a file over a computer network on non-local storage.

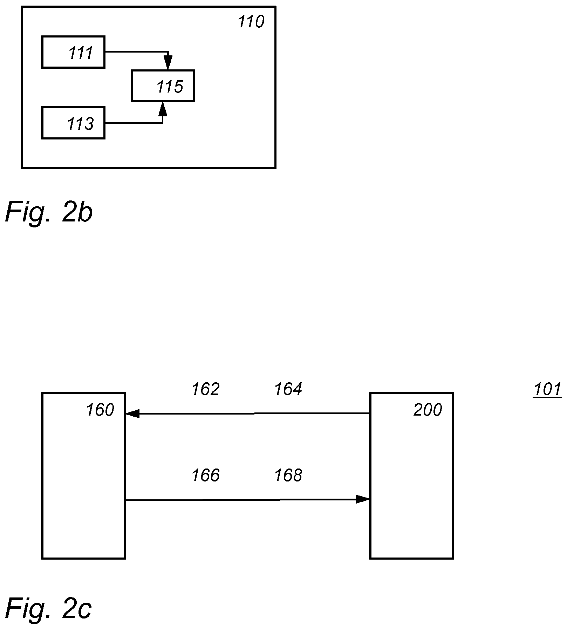

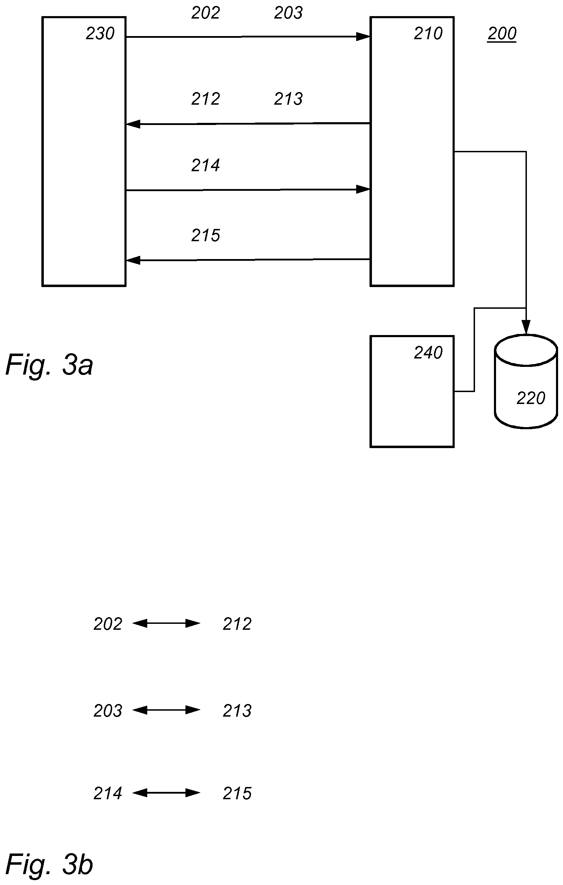

**Figure 3a** schematically shows an example of an embodiment of a cryptographic storage device 200. Storage device 200 is configured for online storing of one or more files received from an upload device 100 for download by a download device 300. Online storing by device 200 may comprise storing a file in a storage of device 200 one or more files received over a computer network. Storage device 200 may be implemented in a storage device as in device 200 in figure 2b. Storage device 200 comprises a storage interface configured to store the one or more files in encrypted form. For example, storage device 200 may comprise a communication interface 230 configured to communicate with the upload device and the download device over a computer network 191.

Returning to figure 2a. Upload device 100 comprises an encryption key unit 110. Encryption key unit 110 is configured to generate one or more file encryption keys 112. The one or more keys 112 will be used to encrypt the one or more files 102. For example, the user may interact with a user interface of upload device 100 to indicate which files the user wants to upload. Upload device 100 may generate as many encryption keys as there are files to upload. This is not necessary though. In an embodiment, fewer encryption keys are generated than the number of files in files 102. In particular, in an embodiment, only one encryption key is generated, which is used for each of the files in files 102. Encryption key unit 110 may generate one or more authentication keys for integrity protection of files 102, e.g., using the authentication keys to compute a MAC, e.g., a CBC-MAC, or the like, e.g., over an encrypted or over an unencrypted file, etc. However, in an embodiment, an encryption key may be used both for encryption and integrity protection, e.g., in a combined block cipher mode.

Upload device 200 is configured to generate a manifest 104. The manifest is discussed more fully below. The manifest is helpful to later download and decrypt the one or more files 102 by a download device 300. For example, the manifest comprises the one or more file encryption keys 112. Interestingly, protection of the manifest may use in large part the same mechanisms as the protection of the files themselves. The key for encrypting the manifest is manifest encryption key 114.

In an embodiment, an encryption key is computed at least from the content of the file or manifest to encrypt. This has the advantage that the random number generation of upload device 100 does not need to be trusted, or at least to a lesser extent. For example, even if the entropy in the random number generation is too low, the quality of the encryption keys is increased by making use of the entropy in the files themselves. For example, a hash may be computed over one or more, or all files in files 102 to obtain a hash. An encryption key may be derived from the hash and possibly another source of randomness. For example, in an embodiment, generating a file encryption key or manifest encryption key (manifest files are discussed below) to encrypt a file or the manifest comprises

- obtaining a random number,
- hashing the file or manifest to obtain a hash, and
- deriving the file encryption key or manifest encryption key from the random number and hash.

For example, in an embodiment the hash is computed, e.g., only computed, from the file or manifest that is currently encrypted. However, in an embodiment, the hash is computed by first hashing all files, and then using the resulting hash for the generation of all encryption keys. For example, generation of an encryption key may also include entropy sources such as one or more filenames of files, one or more description of the files, etc. For example, the generation of an encryption key may also depend on an input that is unique though not secret for each file or manifest. For example, an input to the key derivation function may be a sequence number of the file to be encrypted, and/or a code indicating the manifest, e.g., a particular sequence number such as 0 or 999, etc.

Figure 2b shows one possible embodiment of encryption unit 110. Encryption unit 110 of figure 2b comprises a random number generator 111 configured to generate a random number, e.g., a random number for each file and manifest. Random number generator 111 may be a true or pseudo random number generator. For example, random number generator 111 may call a system random number generator library function. Encryption unit 110 of figure 2b may comprise a hash unit 113 configured to hash one or more files. For example, hash unit 113 may be configured to hash the file or manifest that is being encrypted. Encryption unit 110 of figure 2b may comprise a key derivation unit 115. For example, the key derivation unit 115 may take one more inputs, e.g., of a hash, a random number, and non-secret inputs, such as a salt, e.g., or a key diversifier, such as a sequence number or the like, and derive an encryption key therefrom. Deriving an encryption key 112 or 114 from the result of hash and/or random number, etc., may include the application of a key derivation function 115, for example the function KDF, defined in the OMA DRM Specification of the Open Mobile Alliance (OMA-TS-DRM-DRM-V2_0_2-20080723-A, section 7.1.2 KDF) and similar functions. A key derivation function may also be a hash function. In an embodiment, the manifest encryption key 114 is derived from the hash of the manifest 104. The latter has the advantage that the mechanism for computing the manifest encryption key 114 may be largely the same as the computation of a key of the one or more encryption keys 112. At the same time no entropy is lost from this approach, since the manifest contains the encryption keys 112, and the entropy used to compute the keys is preserved. In other words, manifest key 114 is expected to be as random as encryption keys 112, even if the former is computed from a hash over the manifest file while the latter are computed from a hash over one or more or all files 102. Using a hash of one or more files, etc., reduces the trust in random generator 111 that is required.

In an embodiment, the encryption keys 112 and 114 are each computed only from a random number, a hash over the file being encrypted and optionally non-secret inputs, such as a salt, e.g., or a key diversifier, such as a sequence number or the like.

Upload device 100 comprises an encryption unit 120 configured to encrypt the one or more files 102 with the one or more encryption keys 112 to obtain one or more encrypted files 122. For example, in an embodiment, a different key is generated for each one of the one or more files 102, and a different key is used to encrypt the one or more files 102. For example, in an embodiment, a single key is generated for each one of the one or more files 102, and the single key is used to encrypt the one or more files 102. Encryption unit 120 may also be used to encrypt the manifest 104 with the manifest encryption key 114 to obtain an encrypted manifest 124. In an embodiment, the manifest encryption key is different from the single key used for the encryption of files 102. In an embodiment, files 102 and/or manifest 104 are compressed before being encrypted.

Encryption unit 120 can use various encryption methods. For example, encryption unit 120 may use a block cipher for encryption. For example, the block cipher may be used together with an initialization vector. The initialization vector may be stored together with the encrypted file, e.g., by prepending it. Alternatively, the initialization vector may be stored in the manifest. An example, of a block cipher is AES, DES, 3DES, etc. An example of a block cipher mode for encryption is CBC. Encryption unit 120 may also compute an authentication tag to protect the integrity. For example, encryption unit 120 may compute a MAC. The MAC may be computed using, e.g., HMAC, or it may be computed with a block cipher, e.g., the same block cipher as is used for encryption, e.g., using CBC-MAC. For example, the authentication tag may be computed over the encrypted file, including an initialization vector if any. The initialization vector, if any, may be randomly selected. For example, the initialization vector may be generated in the same way as an encryption key is. In an embodiment, the initialization vector is generated to be different from all encryption keys. For example, a different diversification string may be used, e.g., in addition to random number. An authentication tag, e.g., a MAC, may be stored together with the encrypted file, e.g., prepending or concatenating it. In an embodiment, the upload device, e.g., the processor, is configured to generate one or more authentication tags for the one or more files 102 and/or 122, and to transfer the one or more authentication tags together with the encrypted files to the storage device.

Instead of separate encryption and authentication, a block cipher mode providing both encryption and integrity protection may be used, e.g., modes which combine confidentiality and data integrity into a single cryptographic primitive. These combined modes are referred to as authenticated encryption, AE or "authenc". Examples of AE modes are CCM (SP800-38C), GCM (SP800-38D), CWC, EAX, IAPM, and OCB, etc.

Communication interface 130 may be configured to transfer the encrypted file to storage device 200 and obtain a file identifier 132 associated with the encrypted file at the storage device. There are several ways in which this may be organized. For example, in an embodiment an encrypted file is uploaded as soon as it is encrypted. This has the advantage that, e.g., encryption of the next file and uploading of encrypted files can be done in parallel. In an embodiment, the file identifier is received from storage device 200, but in an embodiment it may be generated at the upload device, e.g., as a random identifier and transferred to the storage device. In the latter case, the storage device may verify that the file identifier is unique and, e.g., to reject it if it is not. A file identifier may later be used to retrieve the uploaded encrypted file. Instead of random generation, a file identifier may be determined, e.g., from, e.g., from one or more of a user identifier of upload device 100, a device identifier of device 100, a sequence number, e.g., a file sequence, and the like.

Upload device 100 may comprise a manifest unit 150 configured to generate a manifest 104 comprising the obtained one or more file identifiers 132 and the one or more file encryption keys 112. For example, the manifest may be generated in some appropriate computer parsable data format, e.g., XML, ASN.1 and the like. For example, manifest unit 150 may receive the encryption keys from encryption key unit 110, and the file identifiers from communication interface 130, and place them in the manifest format.

In an embodiment, a manifest key 114 is generated for manifest 104 by encryption key unit 110; manifest 104 is encrypted by encryption unit 120 using the manifest encryption key. The same options as for file encryption and/or integrity protection are also available for the manifest 104. Interestingly, in an embodiment, the manifest is protected in the same way, e.g., using the same cryptographic primitives, though with a different manifest encryption key 114.

The encrypted manifest 124 may be transferred to the storage device 200 through communication interface 130, and a transfer identifier 134 is obtained associated with the encrypted manifest at the storage device. The transfer identifier 134 may be obtained in the same way as the file identifiers are. For example, the transfer identifier may be generated at the storage device, or at the upload device. For example, the transfer identifier may be random.

The transfer identifier may be obtained, e.g., received from device 200, before transferring the first of the one or more encrypted files. For example, before starting to upload encrypted files, upload device 100 may first contact storage device 200 to initiate the upload and to receive a transfer identifier. This has the advantage that the transfer identifier can be used to keep different upload sessions apart. For example, the transfer identifier may be sent back together with an encrypted file to indicate the session that it belongs to. Alternatively, the transfer identifier may be obtained, e.g., received, from the storage device after transferring the manifest. This has the advantage that no download information can be made until transfer is complete and successful, and avoids download of only partially completed uploads.

The files 102 can be obtained again with knowledge of the transfer identifier 134 and the manifest encryption key. This compact representation of the files can be represented in download information. A download device 300 may use this information to obtain the manifest, decrypt it to obtain the file identifiers and file encryption keys, obtain the encrypted files through the file identifiers and then to decrypt them.

In an embodiment, upload device 100 is configured to transfer an expiration date and/or download maximum to the storage device. The storage device 200 may be configured to limit download of the encrypted files to the expiration date and/or download maximum. For example, the files may not be downloaded after the expiration date or more often than the download maximum, e.g., 10 times. The expiration date and/or download maximum may be transferred to storage device 200 in plain format. For example, storage device 200 may comprise a data base; a record of said data base may comprise one or more of the transfer identifier, file identifiers, download maximum or maximums, expiration date or dates, current number of downloads. Storage device 200 may be configured to verify the limits in the database record before allowing download of the manifest and/or of the files referred to therein. A database record may be indexed with the transfer identifier, and/or one or more database records may be indexed with a file identifier.

In an embodiment, the manifest may comprise one or more file names and/or one or more file descriptions of the one or more files. For example, a file name could be obtained from a corresponding file, e.g., stored at the upload device, or from a user. For example, a description could be obtained from a user of the upload device, or from a file comprising the description or descriptions.

Upload device 100 may comprise a download information unit 140 configured to generate download information 142 comprising the transfer identifier and the manifest encryption key. The download information may comprise the transfer identifier and the manifest encryption key in any suitable way, e.g., as a binary file or as a printable string. A download device 300 may decode the download information to obtain the transfer identifier and the manifest encryption key. For example, assuming a transfer identifier and manifest encryption key of each 128 bit, and 6 bit per printable character, the download information may encode the information in 43 characters. The string may be shared to users with a download device. The download information may be shared with other users, who can type it in, or copy and paste, etc., in a download device, e.g., through a download web page.

It is considered an advantage if the manifest encryption key is not sent to the server. It is also an advantage if the manifest encryption key is not accessible to a web page of the storage device 200. In an embodiment, the download information comprises a URL, said URL comprising a network address of the storage device, the transfer identifier, and manifest encryption key, the manifest encryption key being part of the URL as a fragment identifier. The latter solution for download information exploits an interesting fact about browsers: the fragment identifier is not sent to the server indicated by the URL. For example, the printable string or URL may be shared using messaging applications, e.g., WhatsApp, Telegram and the like, or e-mail, etc.

In an embodiment, the download information comprises a computer optical-readable code encoding at least the transfer identifier, and the manifest encryption key. For example, the download information may be comprised in, e.g., QR code, barcode, picture with OCR-Afont, etc. The latter may be shared with other users as a picture, possibly through the same channels. The code could be printed, and scanned by a user, e.g., a mobile phone. The scanning application may decode the computer optical-readable code to obtain the download information. For example, the code may be scanned by an image device of a desktop computer, e.g., a web-cam. For example, a user could receive the computer optical-readable code on a mobile and show the computer optical-readable code to an image device of the computer. This has the advantage the download information is not shared over other channels between the computer and the mobile phone.

In an embodiment, the processor of the cryptographic upload device is configured to receive from the storage device an authentication token 164. The cryptographic upload device is configured to transfer an authentication token 168 to the storage device together with the encrypted files and the encrypted manifest. Authentication token 168 may be the same or derived from authentication token 164, but may also be obtained, e.g., generated, independently therefrom. For example, the authentication token 168 may be computed from a cryptographic credential, e.g., a key, and/or the authentication token 164, possibly including other information, e.g., a timestamp.

In an embodiment, the processor of the cryptographic upload device is configured to transfer an expiration date and/or download maximum to the storage device, the storage device being configured to limit download of the encrypted files to the expiration date and/or download maximum.

In an embodiment, the manifest comprises one or more file names and/or one or more file descriptions of the one or more files.

In an embodiment, the processor of the cryptographic upload device is configured to generate one or more authentication tags for the one or more files and to transfer the one or more authentication tags together with the encrypted files to the storage device.

**Figure 2c** schematically shows an example of an embodiment of a cryptographic file system 101. File system 101 comprises at least an upload device 100 and a storage device 200, and may also comprise a download device 300. A particular embodiment of system 101 is shown in figure 2c.

In this embodiment, the processor of upload device 100 is configured to execute a web browsing program 160. The browsing program is configured to retrieve from the internet one or more web pages 162 comprising multiple instructions executable by the browsing program, said multiple instructions implementing the online storing of the one or more files. For example, web pages 162 may be retrieved from storage device 200, e.g., which may comprise a web server or cooperate therewith.

Storage device 200 may be configured to transfer to the upload device one or more web pages 162 comprising multiple instructions executable by the browsing program 160. Said multiple instructions may implement the online storing of the one or more files and/or the downloading of the one or more files. Storage device 200 may send an authentication token 164, e.g., together with a transfer identifier. The upload device, e.g., the processor, may be configured to receive from the storage device authentication token 164. After receiving the one or more web pages 162 and authentication token 164, upload device may upload file transfer information; file transfer information may comprise the one or more encrypted files 132 and the encrypted manifest 124. The file transfer information may be sent in one or more rounds, or messages, e.g., one or more digital packets, etc., and may be sent together with an authentication token 168. Authentication token 168 may be derived from authentication token 164, e.g., to prove that upload device has access to authentication token 164. Authentication token 168 may be equal to authentication token 164.

There may be additional messages sent between upload device 100, e.g., browser 160 and storage device 200, e.g., an additional message(s) to manage the protocol, e.g., to indicate success or error cases, and the like.

Returning to figure 3a. Storage device 200 shown in figure 3a may comprise a communication interface 230, e.g., to communicate over a digital computer network with upload device 100, and/or later with download device 300. Storage device 200 may comprise a storage unit 210. The storage unit 210 may be implemented as a local storage, e.g., an array of drives, e.g., hard drives. The storage unit 210 may be implemented as non-local storage, e.g., cloud storage, e.g., implemented through a storage interface to the cloud storage. Storage unit 210 may store the encrypted files and/or manifest. For example, the file identifier and/or transfer identifier may be received by storage device 200 though storage interface 292.

Storage device 200 may comprise a database 220. Database 220 may or may not be part of storage 210. Database 220 may store one or more records indicating the status of uploaded files, e.g., as stored in storage 210, but database 220 may also contain the files themselves, e.g., as so-called binary objects (blobs).

Figure 3a shows that device 200 receives one or more encrypted files, e.g., through communication interface 230. Shown are two encrypted files 202, and 203. The files are encrypted locally with a key at an upload device. Device 200 typically does not have access to the encryption key with which the files are encrypted. Storage unit 210 may be configured to store the one or more received encrypted files, e.g., files 202 and 203, in storage unit 210, e.g., through a storage interface that interfaces to local and/or non-local storage. A file identifier is obtained for the stored files. The file identifier may later be used to retrieve the files again. For example, the received encrypted files may be stored in a storage 210 or database 220 using the file identifier as a retrieval key. The file identifier may be generated by storage 210 or database 220, or may be received from upload device 100, etc. The file identifier may be a sequence number, a random number, a hybrid, a composed number, or the like. For example, storage device 200 may generate the file identifier and transfer the file identifier to the upload device, or receive the file identifier, and optionally check for uniqueness. The file identifier could also be received from a cloud storage.

The file identifiers are returned to the upload devices, e.g., through communication interface 230. Furthermore, storage device 200 receives an encrypted manifest 214. The manifest may be stored in the same manner. For example, a transfer identifier, which may be used to later retrieve the encrypted manifest from storage 210, or database 220, etc. The resulting transfer identifier 215 is then returned to the upload device. The order may be different as shown in figure 3a. For example, the transfer identifier may be exchanged first, then the file identifiers and encrypted files and finally the encrypted manifest. Additional message may be exchanged, for example, an authentication token may be generated by storage device 200 and included in the communication by upload device 100, e.g., to indicate to storage device 200 which protocol message belong together. This is especially convenient, if storage device 200 performs multiple storage protocols at the same time. For example, the token may be a JSON token according to RFC 7519 or RFC 7797.

In an embodiment, the storage device 200 comprises configured to remove encrypted files from the storage. For example, encrypted files may be removed after expiry of the expiry date of an encrypted filed. An encrypted file may have an expiry date which may be a default date, or an assigned date, etc. For example, device 200 may be configured to maintain a list of expiry dates together with associated file identifiers, e.g., sorted by expiry date, and remove files when they are expired. For example, the corresponding manifest may be removed when all or at least one of the files have been removed.

**Figure 3b** schematically shows an example of an association between a file or manifest and a file identifier or transfer identifier. For example, the associations may be established in database 220, or in some other storage, etc.

Figure 3b shows that encrypted file 202 is associated with file identifier 212, encrypted file 203 is associated with file identifier 213, and an encrypted manifest 214 with transfer identifier 215.

There are many ways in which the protocols between device 100 and 200 may be implemented. One way is detailed below. For example, in an embodiment, upload device 100 may first send an upload request to storage device 200. The upload request may comprise additional information such as the size and/or number of files to store, or the identity and/or cryptographic credentials of the uploader. The additional information is not necessary though. The storage device may respond by generating a transfer identifier, and creating a manifest database record in database 220 indexed with the transfer identifier. Storage device 200 may also generate an authentication tag, e.g., an authentication token, e.g., as token 164 or the like. Storage device 200 may generate a signature which may be included in the authentication tag. For example, the tag may comprise a payload and a signature over at least the payload. The pay load may comprise one or more of a timestamp and the transfer identifier. Storage device 200 may respond to the upload request with a first success message, which may include the authentication tag and/or the transfer identifier. The transfer identifier may be part of the authentication token. Upload device 100 may then respond with sending one or more upload messages. An upload message may comprise the authentication tag, or at least part of the authentication tag, or a derived authentication tag. An upload message may comprise an encrypted file. An upload message may comprise a temporary or final file identifier. Storage device 200 may generate a new file identifier, e.g., in case of receiving a temporary file identifier. Storage device 200 may store the encrypted file, e.g., in a new database record, e.g., a file database record, e.g., indexed with the file identifier, or in the manifest record, etc., e.g., together with the file identifier. The derived authentication tag, may be computed by upload device 100 from the authentication tag using a cryptographic credential, e.g., a password, secret key or the like, e.g., using a challenge response protocol. Storage device 200 may respond with an upload success message, which may include the authentication tag, or a new authentication tag, etc. The upload success message may include the temporary file identifier, e.g., if any, and the final file identifier, e.g., if not yet known by the upload device.

After all uploads are finished, the upload device may or may not send an upload finished message, possibly followed by an upload finished success message by the storage device. Finish messages are not needed, as the protocol could continue, potentially, indefinitely, possibly limited by an upload time period. The manifest record and/or file records may comprise expiration dates and/or download maximums. Storage device 200 may be configured to periodically verify if stored files are past the expiration and if so to delete them from storage 200. There may be other criteria for deletion, e.g., exceeding an upload maximum by device 100, exceeding storage capacity, etc. The protocol may be extended with error checking and messages as appropriate. The transfer identifier may be sent to the upload device after receiving the upload finished message. Before then, a temporary transfer identifier may be used, or the protocol may only use the authentication tag, etc. The temporary transfer identifier, tag, etc. may be stored in the manifest record. The transfer identifier may still be generated as the start of the protocol, e.g., after receiving the request message but before sending the request success message. The transfer identifier may be received from the upload device 100; for example, the upload device may determine and send a transfer identifier, e.g., as an alternative to the storage device generating a transfer identifier.

Storage device 200 may comprise a download unit 240. Download unit 240 is configured to receive a download request from a download device. The download request comprising the transfer identifier, and optionally additional information, e.g., identity information of the downloader, a credential, etc. Download unit 240 is configured to retrieve the manifest associated with the transfer identifier through the storage interface, and transfer it to the download device, e.g., over the computer network. Interestingly, even if the encrypted manifest were downloaded by unauthorized users, the security risk is limited as the manifest is encrypted. Next, the storage device may receive one or more file identifiers obtained from the manifest from the download device, retrieve the corresponding one or more encrypted files, and transfer the encrypted files to the download device. Download unit 240 may enforce that file identifiers are received within a predetermined time period from sending the encrypted manifest. The period may be, say 10 minutes or an hour, or longer or shorter, etc. Download unit 240 may also allow that files can be retrieved from the file identifiers, independent from the download status of the encrypted manifest, etc. The upload device and the download device may or may not be the same device.

Interestingly, the download request may be a request for a web-page, say comprising a URL. The request may comprise the transfer identifier, and even the manifest encryption key. The web-page may also comprise an input for receiving the transfer identifier and/or the manifest encryption key. For example, the input may be an input for a character string. For example, the input may be an input for receiving an image from a camera, e.g., a web-cam. The received image comprising the transfer identifier and/or the manifest encryption key in computer optical readable form.

For example, in an embodiment, the web-page may comprise instructions for retrieving the encrypted manifest and decrypting the encrypted manifest. The instructions may be executable by the download device, e.g., computer executable instructions, in particular the instruction may be executable by a web-browser of the download device. For example, the instruction may comprise one or more of, e.g., html, java script, java instructions, and the like. The requested web-page may be configured to obtain the manifest encryption key from a fragment identifier, or for receiving a computer optical-readable code encoding, e.g., the transfer identifier and/or the manifest encryption key. The web-page may be configured to decode the computer optical-readable code to obtain the transfer identifier and the manifest encryption key. It is preferable that the computer optical-readable code is decoded locally; although it is possible to have the code decoded at the storage device. The latter may improve decoding time, but has the disadvantage that increased trust in the storage device is needed.

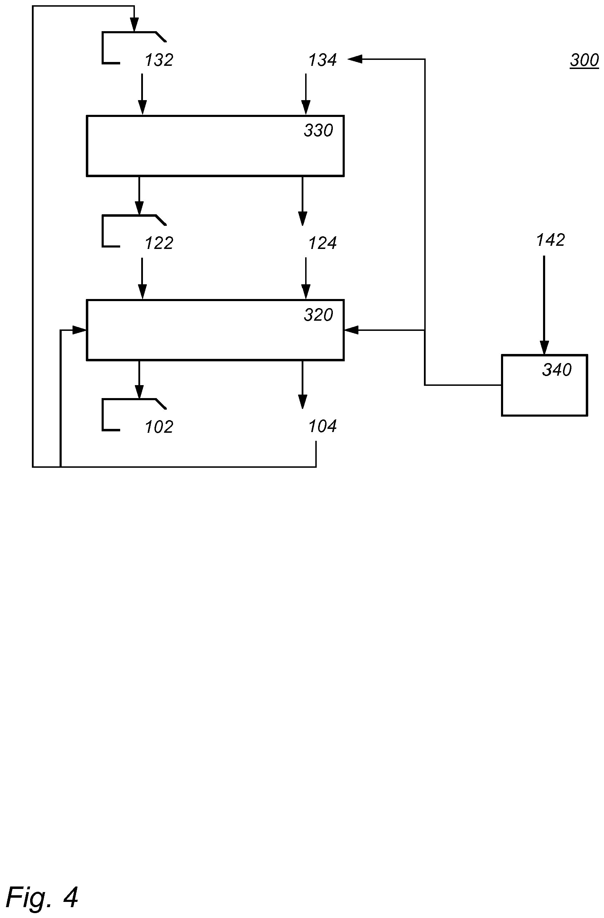

**Figure 4** schematically shows an example of an embodiment of a cryptographic download device 300. 11. Cryptographic download device 300 is configured for downloading one or more files stored online on a cryptographic storage device 200 for download by a cryptographic upload device 100.

Download device 300 may comprise download information unit 340. Download information unit 340 may be configured to receive download information 142 and to obtain from the download information 142 the transfer identifier and/or the manifest encryption key, and typically both. For example, download information unit 340 may be configured to obtain from the download information a URL, said URL comprising a network address of the storage device, the transfer identifier, and manifest encryption key. The manifest encryption key may be part of the URL as a fragment identifier. The download information unit 340 may decode a computer optical-readable code encoding at least one of the transfer identifier, and the manifest encryption key.

Download device 300 comprises a communication interface 330 configured to communicate with the storage device over a computer network, e.g., computer network 191. For example, download device 300 may use communication interface 330 to send a download request to the storage device. The download request may comprise a transfer identifier. Note that the download request does not need to comprise the manifest encryption key. In response to the request, the download device 300 may receive an encrypted manifest associated with the transfer identifier.

Download device 300 may comprise a decryption unit 320, corresponding to encryption unit 120. Decryption unit 320 decrypts the encrypted manifest with the manifest encryption key, thus obtaining one or more file identifiers from the manifest. One or more or all obtained file identifiers are sent to the storage device. Download device 300 receives the corresponding one or more encrypted files in response. One or more file encryption keys are obtained from the manifest and used to decrypt the received encrypted files, e.g., using decryption unit 320.

In the various embodiments of devices 100, 200 and 300, the communication interface may be selected from various alternatives. For example, the interface may be a network interface to a local or wide area network, e.g., the Internet, an application interface (API), etc. The devices 100, 200 and 300 may have a user interface, which may include well-known elements such as one or more buttons, a keyboard, display, touch screen, etc. The user interface may be arranged for accommodating user interaction for performing actions such as initiating an upload, starting a storage server to receive upload and/or download requests, initiating a download, etc. The user actions may include starting a web-browser, downloading an upload and/or download page, etc.

Devices 100, 200 and 300 may comprise storage, e.g., to store executable code and/or data before uploading, during storing and/or after downloading. For example, the data may be computer code, media content, and the like. The storage may be implemented as an electronic memory, say a flash memory, or magnetic memory, say hard disk or the like, or optical memory like a DVD. Storage may comprise multiple discrete memories together making up the storage. Storage may also be a temporary memory, say a RAM.

Typically, the devices 100, 200 and 300 each comprise a microprocessor which executes appropriate software stored at the devices; for example, that software may have been downloaded and/or stored in a corresponding memory, e.g., a volatile memory such as RAM or a non-volatile memory such as Flash. Alternatively, the devices 100, 200 and 300 may, in whole or in part, be implemented in programmable logic, e.g., as field-programmable gate array (FPGA). The devices may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc.

In an embodiment, the devices may comprise one or more circuits configured to implement the corresponding units described herein. The circuits may be a processor circuit and storage circuit, the processor circuit executing instructions represented electronically in the storage circuits. A processor circuit may be implemented in a distributed fashion, e.g., as multiple sub-processor circuits. A storage may be distributed over multiple distributed sub-storages. Part or all of the memory may be an electronic memory, magnetic memory, etc. For example, the storage may have volatile and a non-volatile part. Part of the storage may be read-only. The circuits may also be, FPGA, ASIC or the like.

Below a number of additional examples of various embodiments are described. The following notation is used:

- $X \parallel Y$: concatenation of two byte strings $X$ and $Y$
- HASH: a cryptographic hash function, e.g., SHA-2, SHA-3, etc.
- AES: the Advanced Encryption Standard
- GCM: Galois/Counter mode [5] for symmetric block ciphers
- HMAC: hash-based message authentication code [6]
- HKDF: a key derivation function based on HMAC [7]

Note that other alternatives for these cryptographic primitives are available. For example, instead of AES other block ciphers may be used, e.g., 3DES, Twofish, etc. Instead of a block cipher, a stream cipher may be used, e.g., RC5, Salsa20, etc. Instead of GCM other dual-function modes may be used. Instead of a dual-function, two modes may be used, e.g., one for encryption and one for integrity, e.g., CBC and CBC-MAC. Instead of HMAC another integrity protection may be used, e.g., CBC-MAC based on a block cipher. Instead of HKDF another key derivation may be used.

In an embodiment, a first party, e.g., 'Alice', typically implemented in a first device, e.g., an upload device, wishes to send one or more files to a second party, e.g., 'Bob', typically implemented in a second device, e.g., a download device. To encrypt a file, the first party may derive a $b_{key}$-bit encryption key and a $b_{iv}$-bit initialization vector for that file with:

- a random $b_r$-bit value $r$
- the content of the file
- a cryptographic hash function HASH whose output is a $b_h$-bit long byte string
- a key derivation function HKDF based on HMAC using the above hash function HASH, which extracts a pseudorandom key of desired length $L$ with the input key material and optionally a salt and an information tag.

For example, the following procedure may be used:

```
plaintext := the content of the file
plain hash := HASH(plaintext)
r := random b_r-bit value random hash HASH(r)
key material := HASH(plain hash || random hash)
salt := a b_h-bit all zero byte string
encryption key := HKDF(key material; salt; info = "fileEncryption"; L = b_key)
iv := HKDF(key material; salt; info = "ivKey"; L = b_iv)
```

Thereafter, the file may be encrypted with the AES block cipher in Galois/Counter mode with $t$-bit authentication tag, which allows one to verify the integrity of the data, e.g., ciphertext := AESGCM(encryption key; iv; plaintext; $t$). A non-zero salt may be used as well, say a random salt, or a nonce, etc. Such a salt may be attached to the cipher text.

Since there may be multiple relevant files that the first party would like to send to the second party, the first party may initiate a procedure with the storage device during which the first party uploads the files as nameless binary blobs and subsequently receives from the storage device $b_{id}$-bit unique identifiers for these files. An embodiment may use UUIDs [10] as the unique identifiers, e.g., $b_{id}$ = 128. Thereafter, the first party may create a manifest file which may comprise one or more of the following information, e.g., in the JSON format [18]:

- description: an optional description about the files, provided by The first party
- file names: the original name of each file • file sizes: the size of each file in bytes
- encryption keys: the encryption key of each file, encoded as a URL-safe Base64 string [17].
- types: a MIME type [19] string that describes the type of each file. For example, "image/jpeg" for jpeg files. unique identifiers: identifiers returned from the storage device

For example, after the first party uploads two jpeg files to the storage device, a manifest file may appear as follows:

```
{
        "description": "Pictures from my vacation on Mars",
        "fileMetadata": [
            {"name": "with_an_alien.jpeg",
```

```
        "size": 405651,
        "id": "239bd49d-e69a-492e-89bd-7676ac5da9a9", "encryptionRawSecret":
            "mEDMc2uclwRRhn4MSa4BnLJKfG6MWv6GGBzlolN1aRw.",
        "type": "image/jpeg"
    },
    {"name": "on_a_tree.jpeg",
        "size": 109628,
        "id": 'fb0a5f36-0e68-4ba0-839a-8483310e7fab', "encryptionRawSecret":
            "1dXsZFhGYm83Rg55of89wMcClw-2sgU-_FD6Cf23fCY.",
        "type": "image/jpeg"
    }
    ]
  }
```

The manifest file may then be encrypted in the same manner as a normal file. The first party may then upload the encrypted manifest to the storage device and receive a $b_{id}$-bit unique identifier for the manifest.

After the first party encrypts and uploads files as described above, the encryption key and unique identifier for the manifest may be provided to the second party in some format. The following two formats are advantageous

- a URL: https://servr_address/unique_identifier#encryption_key
- a picture containing, e.g., the storage device address and a QR code that encodes a string, which may include three fields, e.g., separated by commas: app_version,unique_identifier,encryption_key

In both cases, the exact required number of characters is subject to implementation choices. For example, an embodiment may use UUIDs as the unique identifiers and encodes the encryption key as a URL-safe Base64 string. Since the canonical textual representation of a UUID may consist of 32 hexadecimal digits separated by 4 hyphens, and the length of the encryption key $b_{key}$ is, e.g., chosen to be 256 bits, these two fields require 36 and $\left\lceil \frac{256}{8} \cdot \frac{1}{3} \right\rceil = 44$ characters, respectively. The number of characters required for the storage device address may depend on the registered domain name of the storage device. Finally, for the QR code format, the version number may also be included.

In the first case, by entering the URL to a browser, the unique identifier may be provided to the storage device to retrieve the encrypted manifest, while the encryption key may be used by the second party, e.g., the download device to decrypt the manifest locally. Note that the key is not sent to the storage device since it is encoded as a fragment identifier [15]. In the second case, the second party can parse the QR code to retrieve the unique identifier and the encryption key with a web camera, after which the same procedure as described above ensues. Note that anyone who has access to the unique identifier and the encryption key can download and decrypt the manifest. For either format, the first party may send the information to the second party via a confidential, and optionally authenticated channel.

After the second party receives the unique identifier and encryption key for the manifest, he can retrieve and decrypt the manifest, from which he can obtain the unique identifiers and encryption keys for the files that the first party uploaded. The second party then downloads the encrypted files from the storage device with those identifiers and subsequently decrypts them on his own computer. The second party may verify the integrity of each file. After the manifest and files are successfully downloaded, the storage device may erase them from the hard drive.

One can restrict access to the storage device, e.g., by applying password access control. In this manner, only registered users may upload and/or download from the storage device. This can be useful, say, when an embodiment is deployed within an organization.

Embodiments may be implemented based on the client-storage device model. The front-end application for the first party and the second party may be implemented as an Angular application [8] while the back-end application running on the storage device may be implemented with the Django framework [9]. Specific choices of hash functions, key derivation functions, and security parameters may be as follows:

- HASH: SHA-256, with $b_h$ = 256
- $b_r$ = 256
- HKDF: based on HASH and as specified in RFC 5869 [7]
- $b_{key}$ = 256
- $b_{iv}$ = 128
- $t$ = 128
- unique identifiers returned from the storage device: UUID [10], therefore $b_{id}$ = 128

For setup-simplicity and platform-independence, the client front-end in an embodiment may be implemented as a web application running on a browser. The front-end application may utilize the Web Cryptography API standard [11] proposed by W3C to perform cryptographic operations. In particular, when generating the $b_r$-bit random value for deriving an encryption key, the frontend application may call the RandomSource.getRandomValues() API. It might be difficult to examine how these critical cryptographic APIs are implemented. The random value returned by Random-Source.getRandomValues() may therefore not be random at all, either intentionally or not. To mitigate this issue, in an embodiment both this random value and the content of the file to generate the encryption key are used. In this manner, even if an attacker has complete control of the cryptographic API, in order to decrypt the file he may need to know the content of the file already. Since guessing the content of the file is not practical when the file contains enough entropy, embodiment may be considered secure for general large files. Note that it is also possible to derive an encryption key directly with the SubtleCrypto.generateKey() API. Nevertheless, due to the fact that the browser implementation may not be correct or trustworthy, some embodiments adopt the aforementioned approach. After the encryption key is derived, the front-end application may encrypt the file and display the encryption key, e.g., as a URL or as a QR code, on the browser. In an embodiment, a user is warned to use a clean browser profile without active browser extensions.

In an embodiment, the storage device is configured to erase the encrypted files after they have been successfully delivered to the intended party. However, say, a compromised storage device may not do so. In addition, an attacker might be able to intercept the upload traffic to a storage device to obtain a copy of the encrypted files. It is therefore recommended not to reveal the encryption key and the transfer identifier even after the files have been received. For example, instead, both parties may erase them.

The encryption key and unique identifier, e.g., the transfer identifier, may be encoded in various ways, e.g., as herein. The URL format explicitly includes the address of the storage device while the QR code contained in the picture may not. Instead, the storage device address may be shown as plain text at the bottom of the picture. This has an advantage, since not all web cameras can decode high resolution pictures well. Since the resolution requirement is related to the amount of information encoded in a QR code, some embodiments do not include the storage device address in the QR code. A download device may therefore connect to the storage device with the address at the bottom of the picture and subsequently presents the QR code to the web camera. To download files, one may connect to the storage device address included in the URL or the picture in order to prevent phishing attacks.

Note that when deriving the encryption key and the initialization vector from the key material with HKDF as described above some embodiments do not use salts. Indeed, one could generate random salts, use them during key derivation, and include them in either the URL or QR code for the download device. However, according to experiments, including sufficiently large salts in the QR code would significantly increase the resolution requirement for web cameras. One should note that for HKDF, a salt is completely optional [7] therefore the absence of a salt would not compromise the security of HKDF.

One might suspect that an attacker who has access to the storage device might be able to decrypt the manifest file by brute-forcing, which would subsequently provide the second party all the encryption keys of the files listed in the manifest. This is however impractical due to the fact that the manifest includes the encryption keys, which are long byte strings. Even when the attacker has knowledge of all the other 7 fields in the manifest, a brute-force attack based on guessing the content of the manifest requires enumerating all the possible encryption keys. A brute force attack on the manifest is therefore at least as difficult as brute-forcing an encrypted file directly.

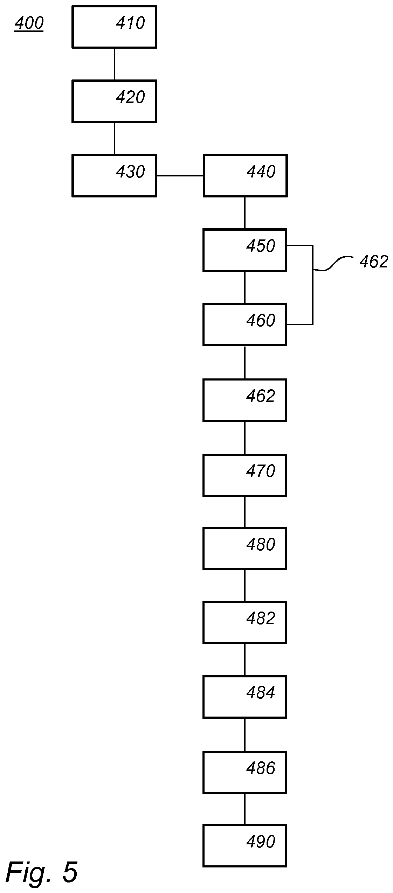

**Figure 5** schematically shows an example of an embodiment of a cryptographic upload method 400. Upload method (400) is configured for online storing of one or more files (102) for download. The upload method comprises

- accessing (410) the one or more files (102),
- communicating (420) with a storage device over a computer network,
- online storing (430) of one or more files on a cryptographic storage device, the online storing comprising:

  - generating (440) one or more file encryption keys (112),
  - for each file of the one or more files,

    - encrypting (450) the file to obtain an encrypted file (122) with a key of the one or more file encryption keys,
    - transferring (460) the encrypted file to the storage device and obtaining (462) a file identifier (132) associated with the encrypted file at the storage device,

  - generating (470) a manifest (104) comprising the obtained one or more file identifiers and the one or more file encryption keys,
  - generating (480) a manifest encryption key (114), encrypting (482) the manifest with the manifest encryption key to obtain an encrypted manifest (124), transfer (484) the encrypted manifest to the storage device, and obtain (486) a transfer identifier (134) associated with the encrypted manifest at the storage device,

- generating (490) download information (142) comprising the transfer identifier and the manifest encryption key.

The method may be ordered in the order listed above, but various alternatives are possible. For example, the transfer identifier may be obtained before, after or during the uploading of the one more encrypted files. Similarly, the file identifiers may be obtained at any point before generating the manifest. Generating keys and transferring the encrypted files may be done in turn, e.g., successively, or may be done together. For example, generating one or more keys in one or more batches, encrypting the one or more files in one or more batches and uploading the encrypted files in one or more batches, etc.

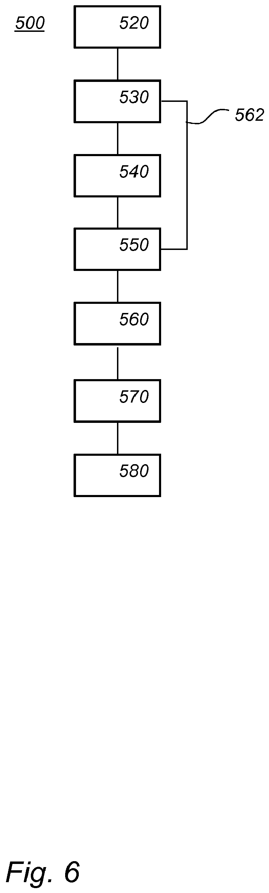

**Figure 6** schematically shows an example of an embodiment of a cryptographic storage method 500. Cryptographic storage method (500) is configured for online storing of one or more received files for download. The method comprises

- communicating (520) with an upload device over a computer network,
- for each file of the one or more files,
- receiving (530) from the upload device the file (202, 203) encrypted with a key of one or more file encryption keys,
- storing (540) the received encrypted file in encrypted form and obtaining (550) a file identifier (212, 213) associated with the encrypted file for retrieving the encrypted file from the storage interface, and
- receive (560) an encrypted manifest (214) comprising the one or more file identifiers and the one or more file encryption keys, obtaining (570) a transfer identifier (215), storing (580) the received encrypted manifest associated with the transfer identifier for later retrieving of the encrypted manifest.

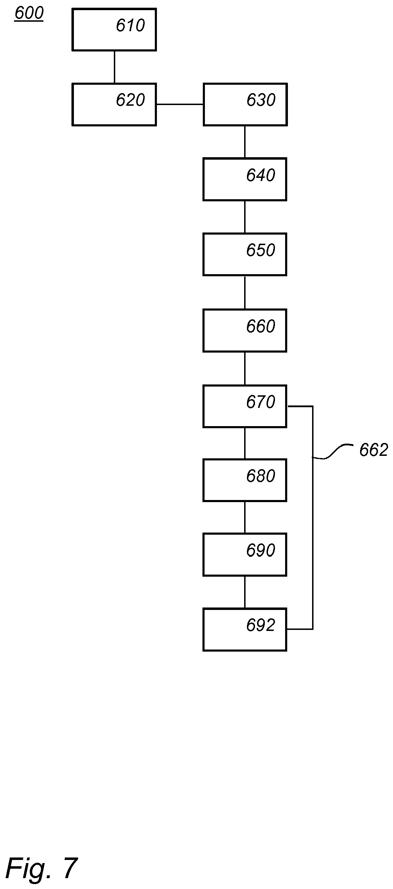

**Figure** 7 schematically shows an example of an embodiment of a cryptographic download method 600. Cryptographic download method (600) is configured for downloading one or more files stored online for download. The cryptographic download method comprises

- communicating (610) with the storage device over a computer network,
- downloading (620) one or more files form the cryptographic storage device, the downloading comprising:

  - sending (630) a download request to the storage device, the download request comprising a transfer identifier,
  - receiving (640) an encrypted manifest associated with the transfer identifier,
  - decrypting (650) the encrypted manifest with a manifest encryption key,
  - obtaining (660) one or more file identifiers from the manifest, sending (670) the one or more file identifiers to the storage device and receiving (680) the corresponding one or more encrypted files,
  - obtaining (690) one or more file encryption keys from the manifest and decrypting (692) the received encrypted files.

Many different ways of executing the method are possible, as will be apparent to a person skilled in the art. For example, the order of the steps can be varied or some steps may be executed in parallel. Moreover, in between steps other method steps may be inserted. The inserted steps may represent refinements of the method such as described herein, or may be unrelated to the method. For example, parts of the methods may be executed, at least partially, in parallel, e.g., generating keys, encrypting files and uploading files. Moreover, a given part may not have finished completely before a next step is started.

Embodiments of the method may be executed using software, which comprises instructions for causing a processor system to perform method 400, 500 or 600. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the invention also extends to computer programs, particularly computer programs on or in a carrier, adapted for putting the invention into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

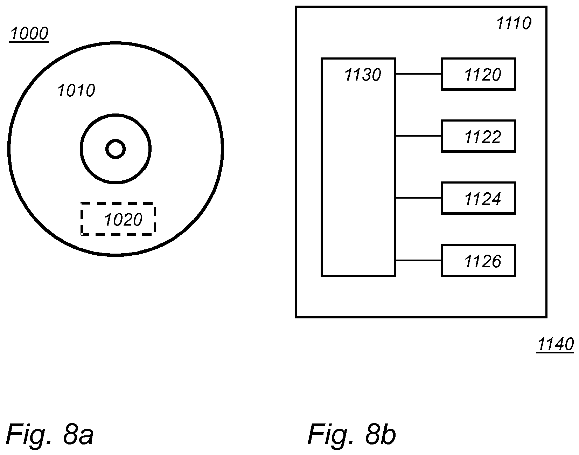

**Figure 8a** shows a computer readable medium 1000 having a writable part 1010 comprising a computer program 1020, the computer program 1020 comprising instructions for causing a processor system to perform a method of uploading, storage or downloading, according to an embodiment. The computer program 1020 may be embodied on the computer readable medium 1000 as physical marks or by means of magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said method of uploading, storage or downloading.

**Figure 8b** shows in a schematic representation of a processor system 1140 according to an embodiment of an uploading, storage, or downloading device. The processor system comprises one or more integrated circuits 1110. The architecture of the one or more integrated circuits 1110 is schematically shown in Figure 8b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., the uploading, storage, and/or downloading device may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Claims**

1. A cryptographic upload device (100) configured for online storing of one or more files (102) on a cryptographic storage device (200) for download by a cryptographic download device (300), the cryptographic upload device comprising

    - a storage interface (192) configured to access the one or more files (102),
    - a communication interface (130) configured to communicate with the storage device over a computer network,
    - a processor (194) configured for online storing of one or more files on a cryptographic storage device, the online storing comprising:

        - generating one or more file encryption keys (112),
        - for each file of the one or more files,

            - encrypting the file to obtain an encrypted file (122) with a key of the one or more file encryption keys,
            - transferring the encrypted file to the storage device and obtaining a file identifier (132) associated with the encrypted file at the storage device,

- generating a manifest (104) comprising the obtained one or more file identifiers and the one or more file encryption keys,
- generating a manifest encryption key (114), encrypting the manifest with the manifest encryption key to obtain an encrypted manifest (124), transferring the encrypted manifest to the storage device, and obtaining a transfer identifier (134) associated with the encrypted manifest at the storage device,
- generating download information (142) comprising the transfer identifier and the manifest encryption key, wherein at least one of the transfer identifier and the manifest encryption key is encoded in a computer optical-readable code.

2. A cryptographic upload device as in Claim 1, wherein the processor is configured to execute a web browsing program (160), the browsing program being configured to retrieve from the internet one or more web pages (162) comprising multiple instructions executable by the browsing program, said multiple instructions implementing the online storing of the one or more files.

3. A cryptographic upload device as in any one of the preceding claims, wherein

- the download information comprises a URL, said URL comprising a network address of the storage device, the transfer identifier, and manifest encryption key, the manifest encryption key being part of the URL as a fragment identifier.

4. A cryptographic upload device as in any one of the preceding claims, wherein generating a file encryption key or manifest encryption key to encrypt a file or the manifest comprises

- obtaining a random number,
- hashing the file or manifest to obtain a hash, and
- deriving the file encryption key or manifest encryption key from the random number and hash.

5. A cryptographic upload device as in any one of the preceding claims, wherein

- the transfer identifier is received from the storage device before transferring the first of the one or more encrypted files, or
- the transfer identifier is received from the storage device after transferring the manifest.

6. A cryptographic storage device (200) configured for online storing of one or more files received from a cryptographic upload device for download by a cryptographic download device, the cryptographic storage device comprising

- a storage interface configured to store the one or more files in encrypted form,
- a communication interface (230) configured to communicate with the upload device and the download device over a computer network,
- a processor configured to

- for each file of the one or more files,

- receive from the upload device the file (202, 203) encrypted with a key of one or more file encryption keys,
- store the received encrypted file through the storage interface and obtain a file identifier (212, 213) associated with the encrypted file for retrieving the encrypted file from the storage interface, and

- receive an encrypted manifest (214) comprising the one or more file identifiers and the one or more file encryption keys, obtain a transfer identifier (215), store the received encrypted manifest through the storage interface associated with the transfer identifier for later retrieving of the encrypted manifest from the storage interface.

7. A cryptographic storage device as in Claim 6, wherein the processor is configured to transfer to the upload device one or more web pages comprising multiple instructions executable by the browsing program, said multiple instructions implementing the online storing of the one or more files and/or the downloading of the one or more files.

8. A cryptographic storage device as in any one of claims 6-7, wherein the processor is configured to

- receive a download request from a download device, the download request comprising the transfer identifier,
- retrieve the manifest associated with the transfer identifier through the storage interface, and transfer the encrypted manifest to the download device,
- receive one or more file identifiers obtained from the manifest from the download device and retrieve the corresponding one or more encrypted files,
- transfer the encrypted files to the download device.

9. A cryptographic storage device as in Claim 8, wherein receiving the download request comprises receiving a request for a web-page, the web-page comprising instructions for retrieving the encrypted manifest, and decrypting the encrypted manifest, wherein

- the download request comprises the transfer identifier, and the web-page being configured to obtain the manifest encryption key from a fragment identifier, or
- the web-page comprising instructions for

- receiving a computer optical-readable code encoding at least one of the transfer identifier, and a manifest encryption key,
- decoding the computer optical-readable code to obtain the transfer identifier and the manifest encryption key.

10. A cryptographic storage device as in any one of claims 6-9, comprising a database, the processor being configured to

- during uploading,

- create one or more database records comprising the transfer identifier and/or the one or more file identifiers,
- receive an expiration date and/or download maximum from the upload device,
- store the expiration date and/or download maximum in the database record,

- during downloading

- verify before allowing downloading of a file of the one or more encrypted files that the expiration date and/or download maximum has not been exceeded.

11. A cryptographic download device (300) configured for downloading one or more files stored online on a cryptographic storage device for download by a cryptographic upload device, the cryptographic download device comprising

- a communication interface configured to communicate with the storage device over a computer network,
- a processor configured for downloading one or more files form the cryptographic storage device, the downloading comprising:

- sending a download request to the storage device, the download request comprising a transfer identifier,
- receiving an encrypted manifest associated with the transfer identifier,
- decrypting the encrypted manifest with a manifest encryption key,
- obtaining one or more file identifiers from the manifest, sending the one or more file identifiers to the storage device and receiving the corresponding one or more encrypted files,
- obtaining one or more file encryption keys from the manifest and decrypting the received encrypted files.

12. A cryptographic download device as in Claim 11, wherein the processor is configured to receive download information and to generate the download request from the download information, wherein

- the download information comprises a URL, said URL comprising a network address of the storage device, the transfer identifier, and the manifest encryption key, the manifest encryption key being part of the URL as a fragment identifier, the processor being configured to send the download request to the network address of the storage device,
and/or
- the download information comprises a computer optical-readable code encoding at least one of the transfer identifier, and the manifest encryption key, the processor being configured to obtain the transfer identifier and the manifest encryption key from the computer optical-readable code.

13. A cryptographic upload method (400) configured for online storing of one or more files (102) for download, the cryptographic upload method comprising

- accessing (410) the one or more files (102),
- communicating (420) with a storage device over a computer network,
- online storing (430) of one or more files on a cryptographic storage device, the online storing comprising:

  - generating (440) one or more file encryption keys (112),
  - for each file of the one or more files,

    - encrypting (450) the file to obtain an encrypted file (122) with a key of the one or more file encryption keys,
    - transferring (460) the encrypted file to the storage device and obtaining (462) a file identifier (132) associated with the encrypted file at the storage device,

  - generating (470) a manifest (104) comprising the obtained one or more file identifiers and the one or more file encryption keys,
  - generating (480) a manifest encryption key (114), encrypting (482) the manifest with the manifest encryption key to obtain an encrypted manifest (124), transfer (484) the encrypted manifest to the storage device, and obtain (486) a transfer identifier (134) associated with the encrypted manifest at the storage device,
  - generating (490) download information (142) comprising the transfer identifier and the manifest encryption key.

14. A cryptographic storage method (500) configured for online storing of one or more received files for download, the cryptographic storage method comprising

- communicating (520) with an upload device over a computer network,
- for each file of the one or more files,

  - receiving (530) from the upload device the file (202, 203) encrypted with a key of one or more file encryption keys,
  - storing (540) the received encrypted file in encrypted form and obtaining (550) a file identifier (212, 213) associated with the encrypted file for retrieving the encrypted file from the storage interface, and

- receive (560) an encrypted manifest (214) comprising the one or more file identifiers and the one or more file encryption keys, obtaining (570) a transfer identifier (215), storing (580) the received encrypted manifest associated with the transfer identifier for later retrieving of the encrypted manifest.

15. A cryptographic download method (600) configured for downloading one or more files stored online for download, the cryptographic download method comprising

- communicating (610) with the storage device over a computer network,
- downloading (620) one or more files form the cryptographic storage device, the downloading comprising:

  - sending (630) a download request to the storage device, the download request comprising a transfer identifier,
  - receiving (640) an encrypted manifest associated with the transfer identifier,
  - decrypting (650) the encrypted manifest with a manifest encryption key,
  - obtaining (660) one or more file identifiers from the manifest, sending (670) the one or more file identifiers to the storage device and receiving (680) the corresponding one or more encrypted files,
  - obtaining (690) one or more file encryption keys from the manifest and decrypting (692) the received encrypted files.

16. A computer readable medium (1000) comprising transitory or non-transitory data (1020) representing instructions to cause a processor system to perform the method according to any one of Claims 13 to 15.

Fig. 1a

Fig. 1b

Fig. 1c

Fig. 1d

*Fig. 2a*

110

111

115

113

*Fig. 2b*

162    164    101

160    200

166    168

*Fig. 2c*

Fig. 3a

Fig. 3b

*Fig. 4*

*Fig. 5*

*Fig. 6*

_600_

```
        ┌──────────┐
        │   610    │
        └────┬─────┘
  ┌──────────┴─┐   ┌────────────┐
  │   620      ├───┤    630     │
  └────────────┘   └─────┬──────┘
                   ┌──────┴─────┐
                   │    640     │
                   └─────┬──────┘
                   ┌──────┴─────┐
                   │    650     │
                   └─────┬──────┘
                   ┌──────┴─────┐
                   │    660     │
                   └─────┬──────┘
                   ┌──────┴─────┐
                   │    670     ├──┐
                   └─────┬──────┘  │
                                    ─ 662
                   ┌──────┴─────┐  │
                   │    680     │  │
                   └─────┬──────┘  │
                   ┌──────┴─────┐  │
                   │    690     │  │
                   └─────┬──────┘  │
                   ┌──────┴─────┐  │
                   │    692     ├──┘
                   └────────────┘
```

_Fig. 7_

*Fig. 8a*

*Fig. 8b*

Europäisches
Patentamt

European
Patent Office

Office européen
des brevets

# EUROPEAN SEARCH REPORT

Application Number

EP 19 19 3216

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 590 958 B1 (HOWELL CHRISTOPHER A [US] ET AL) 7 March 2017 (2017-03-07) <br> * column 1, line 46 - column 2, line 32 * <br> * column 5, line 60 - column 6, line 5 * <br> * column 8, line 3 - column 9, line 16 * <br> * column 10, line 29 - column 10, line 51 * <br> * column 11, line 42 - column 13, line 3 * <br> * figures 1, 4, 8 * <br> ----- | 1-16 | INV. <br> G06F21/62 <br> H04L29/08 <br> H04L9/08 <br> H04L29/06 |
| X | US 2013/198521 A1 (WU JIANQING [US]) 1 August 2013 (2013-08-01) <br> * paragraphs [0019] - [0020], [0083], [0089], [0100] - [0101], [0164], [0187], [0190] - [0191], [0260], [0283] - [0286] * <br> * figure 1 * <br> ----- | 1-16 | |
| A | US 2012/278616 A1 (STEVENS MARK LIU [US]) 1 November 2012 (2012-11-01) <br> * paragraphs [0002], [0010] - [0013], [0021] - [0022], [0032] - [0033] * <br> * figures 1, 4, 5 * <br> ----- | 1-16 | TECHNICAL FIELDS SEARCHED (IPC) <br><br> G06F <br> H04L |
| A | US 2015/207783 A1 (TEMPLIN CHRISTOPHER [US] ET AL) 23 July 2015 (2015-07-23) <br> * paragraphs [0013], [0033] - [0034], [0038] - [0040], [0044] - [0046] * <br> * figure 1 * <br> ----- | 1-16 | |

The present search report has been drawn up for all claims

| Place of search | Date of completion of the search | Examiner |
|---|---|---|
| Munich | 18 December 2019 | Volpato, Gian Luca |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 19 3216

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2019

| Patent document cited in search report | | Publication date | Patent family member(s) | | Publication date |
|---|---|---|---|---|---|
| US 9590958 | B1 | 07-03-2017 | US | 9590958 B1 | 07-03-2017 |
| | | | US | 9602477 B1 | 21-03-2017 |
| | | | US | 9805212 B1 | 31-10-2017 |
| | | | US | 10242217 B1 | 26-03-2019 |
| US 2013198521 | A1 | 01-08-2013 | CN | 103297413 A | 11-09-2013 |
| | | | US | 2013198521 A1 | 01-08-2013 |
| | | | US | 2017005807 A1 | 05-01-2017 |
| US 2012278616 | A1 | 01-11-2012 | JP | 2012231450 A | 22-11-2012 |
| | | | US | 2012278616 A1 | 01-11-2012 |
| US 2015207783 | A1 | 23-07-2015 | US | 2011296179 A1 | 01-12-2011 |
| | | | US | 2015207783 A1 | 23-07-2015 |
| | | | WO | 2011103561 A2 | 25-08-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017163069 A1

**Non-patent literature cited in the description**

- *Signal, https://www.signal.org/*
- *Wire, https://wire.com/en/*
- *WhatsApp, https://www.whatsapp.com/*
- *OpenPGP Message Format, https://tools.ietf.org/html/rfc4880*
- *Recommendation for Block Cipher Modes of Operation: Galois/Counter Mode (GCM) and GMAC, https://nvlpubs.nist.gov/nistpubs/legacy/sp/nistspecialpublication800-38d.pdf*
- *HMAC: Keyed-Hashing for Message Authentication, https://tools.ietf.org/html/rfc2104*
- *HMAC-based Extract-and-Expand Key Derivation Function (HKDF), https://tools.ietf.org/html/rfc5869*
- *The Angular Application Platform, https://angular.io/*
- *The Django Web Framework, https://www.djangoproject.com/*
- *A Universally Unique IDentifier (UUID) URN Namespace, https://tools.ietf.org/html/rfc4122*
- *Web Cryptography API, https://www.w3.org/TR/WebCryptoAPI/*
- *HTTPS Everywhere, https://www.eff.org/https-everywhere*
- *AdBlock, https://getadblock.com/*
- *The Tor Network, https://www.torproject.org/*
- *Uniform Resource Identifier (URI): Generic Syntax, https://tools.ietf.org/html/rfc3986*
- *Domain Name System Security Extensions, https://tools.ietf.org/html/rfc2535*
- *The Base16, Base32, and Base64 Data Encodings, https://tools.ietf.org/html/rfc4648*
- *The JavaScript Object Notation (JSON) Data Interchange Format, https://tools.ietf.org/html/rfc8259*
- *Multipurpose Internet Mail Extensions (MIME) Part One: Format of Internet Message Bodies, https://tools.ietf.org/html/rfc2045*